# EUROPEAN PATENT SPECIFICATION

(11) **EP 3 845 581 B1**
(45) Date of publication and mention of the grant of the patent: **03.04.2024**
(21) Application number: 19869164.4
(22) Date of filing: 30.09.2019
(51) Int. Cl.: C08G 63/183, C08G 63/199, C08G 63/42, C08L 67/02

(54) **POLYESTER COPOLYMER HAVING EXCELLENT PROCESSABILITY, AND PRODUCT COMPRISING SAME**
POLYESTER-COPOLYMER MIT AUSGEZEICHNETER VERARBEITBARKEIT UND PRODUKT DAMIT
COPOLYMÈRE DE POLYESTER AYANT UNE EXCELLENTE APTITUDE AU TRAITEMENT, ET PRODUIT LE COMPRENANT

(30) Priority: 05.10.2018 KR 20180119266
(43) Date of publication of application: 07.07.2021
(73) Proprietor: SK Chemicals Co., Ltd., Seongnam-si, Gyeonggi-do 13494 (KR)
(72) Inventor: HWANG, Dong-June, Seongnam-si, Gyeonggi-do 13494 (KR); KANG, Byoung-Gook, Anyang-si, Gyeonggi-do 14071 (KR); SIM, Jinsook, Seongnam-si, Gyeonggi-do 13494 (KR)
(74) Representative: Berggren Oy
(86) International application number: PCT/KR2019/012740
(87) International publication number: WO 2020/071708

(56) References cited:
- EP-A1- 2 857 433
- EP-A1- 3 925 999
- WO-A1-2017/038949
- JP-A- 2016 102 173
- KR-A- 20130 136 776
- KR-A- 20170 037 588
- KR-A- 20190 107 562
- US-A1- 2005 131 165

## Description

### [TECHNICAL FIELD]

The present disclosure relates to a polyester copolymer having excellent processability and a product including the same, and more particularly to a polyester copolymer applicable to an extrusion blow molding (EBM) process.

### [BACKGROUND OF ART]

Since polyester resins have superior mechanical strength, heat resistance, transparency and gas barrierability, they are suitable for a container for beverage, a packing film or a material of an audio/video film and thus used in volume. In addition, they are also widely produced worldwide as an industrial material such as medical fibers or tire cords. Sheets or boards of the polyester have good transparency and excellent mechanical strength, so they are widely used as materials for cases, boxes, partitions, store shelves, protection panels, blister packing, construction materials, interior or exterior materials, etc.

An injection blow molding (IBM) process is mainly applied to prepare products using the polyester, which enables mass production. In the case of amorphous polyester, an extrusion blow molding (EBM) process may be applied. As polymers applied to EBM, polyethylene (PE) and polypropylene (PP) account for more than 50% of the overall market, and PVC, PETG, and PC, known for transparency, account for the rest.

Among them, PETG (glycol-modified poly(1,4-cyclohexylenedimethylene terephthalate)) having excellent chemical resistance is mainly used in cosmetic containers, dyes, detergent containers, etc. Since the excellent chemical resistance can reduce the loss of appearance transparency caused by strong solvents or cleaning products of household goods, the market thereof is gradually increasing. PETG has advantages of polyester's chemical resistance and its non-crystalline nature, which makes it possible to produce products, especially containers, by the EBM process in the lower temperature range than the IBM.

However, PETG has a lower viscosity than PE or PP, so that molding cannot be performed unless a molding temperature is sufficiently lowered, and it is difficult to make a large parison due to the relatively low viscosity. The low viscosity of PETG also makes it difficult to apply a multi-head method that can make several parisons in the EBM process. That is, when PETG is applied to the multi-head method, a difference in length between the parisons occurs, and thus there is a difficulty in production. EP 2 857 433 A1 discloses in example 1 a copolyester made from TPA, ISB, CHDM and EG, having an intrinsic viscosity of 0,8 dl/ g. US 2005/131165 A1 discloses copolyesters prepared from TPA, CHDM, EG and TMA. The intrinsic viscosity is between 0,6 and 0,9.

### [DETAILED DESCRIPTION OF THE INVENTION]

### [Technical Problem]

The present disclosure is to provide a polyester copolymer having excellent processability. It is also to provide a product including the polyester copolymer.

### [Technical Solution]

In order to solve the above problems, there is provided a polyester copolymer including 1) a residue of a dicarboxylic acid component containing terephthalic acid; 2) a residue of diol components containing cyclohexanedimethanol, ethylene glycol, and isosorbide; and 3) a residue of a trifunctional compound, wherein the polyester copolymer has an intrinsic viscosity of 0.75 to 0.82 dl/g.

Hereinafter, the present invention will be described in detail.

### Definition of terms

The copolymer according to the present disclosure relates to a copolymer prepared by copolymerizing a dicarboxylic acid component and diol components, and relates to a polyester copolymer in which a trifunctional compound participates in the reaction of the above copolymerization process.

As used herein, the term 'residue' means a moiety or unit, which is contained in the product of a chemical reaction of a specific compound and is derived from the specific compound. Specifically, each of the residue of the dicarboxylic acid component and residue of the diol component means either a moiety derived from the dicarboxylic acid component or the diol component of a polyester copolymer formed by esterification or polycondensation. In addition, the 'residue' of a trifunctional compound means a moiety derived from the trifunctional compound in the ester structure formed by esterification of the functional group with the diol component.

### The dicarboxylic acid component

The dicarboxylic acid component used herein means a main monomer constituting the polyester copolymer together with the diol component. Particularly, the dicarboxylic acid includes terephthalic acid, and this terephthalic acid may improve physical properties such as heat resistance, chemical resistance, and weather resistance of the polyester copolymer according to the present disclosure.

The dicarboxylic acid component may further include an aromatic dicarboxylic acid component, an aliphatic dicarboxylic acid component, or a mixture thereof in addition to terephthalic acid. In this case, the dicarboxylic acid component other than terephthalic acid is preferably contained in 1 to 30 wt% based on a total weight of the total dicarboxylic acid component.

The aromatic dicarboxylic acid component may be aromatic dicarboxylic acid having 8 to 20 carbon atoms, preferably 8 to 14 carbon atoms, or a mixture thereof. Examples of the aromatic dicarboxylic acid may include isophthalic acid, naphthalene dicarboxylic acid such as 2,6-naphthalene dicarboxylic acid, diphenyl dicarboxylic acid, 4,4'-stilbene dicarboxylic acid, 2,5-furan dicarboxylic acid, 2,5-thiophene dicarboxylic acid, but specific examples of the aromatic dicarboxylic acid are not limited thereto. The aliphatic dicarboxylic acid component may be aliphatic dicarboxylic acid having 4 to 20 carbon atoms, preferably 4 to 12 carbon atoms, or a mixture thereof. Examples of the aliphatic dicarboxylic acid may include cyclohexanedicarboxylic acid such as 1,4-cyclohexanedicarboxylic acid or 1,3-cyclohexanedicarboxylic acid, a linear, branched, or cyclic aliphatic dicarboxylic acid component such as phthalic acid, sebacic acid, succinic acid, isodecylsuccinic acid, maleic acid, fumaric acid, adipic acid, glutaric acid, or azelaic acid, but specific examples of the aliphatic dicarboxylic acid are not limited thereto.

### The diol component

The diol component used herein means a main monomer constituting the polyester copolymer together with the dicarboxylic acid component. Particularly, the diol component includes cyclohexanedimethanol, ethylene glycol, and isosorbide.

The cyclohexanedimethanol (for example, 1,2-cyclohexanedimethanol, 1,3-cyclohexanedimethanol or 1,4-cyclohexanedimethanol) is a component for improving transparency and impact resistance of the polyester copolymer to be prepared. Preferably, the residue of cyclohexanedimethanol is contained in 30 to 70 parts by weight based on 100 parts by weight of the residue of the total diol components.

The ethylene glycol is a component for improving transparency and impact resistance of the polyester copolymer to be prepared together with the cyclohexanedimethanol. Preferably, the residue of ethylene glycol is contained in 5 to 25 parts by weight based on 100 parts by weight of the residue of the total diol components.

The isosorbide is used to improve processability of the polyester copolymer to be prepared. Although the diol component of cyclohexanedimethanol and ethylene glycol improves the transparency and impact resistance of the polyester copolymer, shear thinning characteristics should be improved and a crystallization rate should be lowered for improving processability. However, it is difficult to achieve these effects using only the cyclohexanedimethanol and ethylene glycol. When containing isosorbide as the diol component, the shear thinning characteristics are improved and the crystallization rate is lowered while the transparency and impact strength are maintained, thereby improving the processability of the polyester copolymer to be prepared. Preferably, the residue of isosorbide is contained in 0.1 to 5 parts by weight based on 100 parts by weight of the residue of the total diol components.

### The trifunctional compound

The trifunctional compound used herein is a component used in the preparation of the polyester copolymer in addition to the dicarboxylic acid component and the diol component described above, and is added to further improve processability, particularly shear thinning characteristics.

In the EBM process, shear thinning characteristics are required, wherein the shear thinning characteristics maintain low viscosity in a high shear stress section inside a screw of a molding machine and exhibit high viscosity in a section forming a parison having low shear stress. Such shear thinning characteristics minimize heat generated by shear stress friction inside the screw and lower the temperature of the parison itself, thereby preventing the friction heat from being generated at a temperature higher than a molding temperature set in the molding machine.

In the case of multi-head EBM with higher shear stress, several parisons are made from one screw, which results in higher shear stress due to higher RPM of the screw for more extrusion amount. Accordingly, better thinning characteristics are required.

Although the processability of the polyester copolymer to be prepared may be improved by controlling the above-described diol component, it is necessary to form branches or grafts in the main chain of the polyester copolymer in order to improve, in particular, shear thinning characteristics. In this case, crystallization becomes difficult compared to simple linear polyester copolymers, which means an improvement in shear thinning characteristics.

As will be described later, it was confirmed that Examples using the trifunctional compound had much improved processability compared to Comparative Examples in which the trifunctional compound was not used. Although not theoretically limited, this is because complex chains are produced by the formation of branches or grafts in the main chain of the polyester copolymer as described above.

Preferably, the functional group means tricarboxylic acid or an anhydride thereof. More preferably, the trifunctional compound may be benzene-1,2,3-tricarboxylic acid, benzene-1,2,3-tricarboxylic acid anhydride, benzene-1,2,4-tricarboxylic acid, or benzene-1,2,4-tricarboxylic acid anhydride.

Preferably, the residue of the trifunctional compound may be contained in 0.01 to 1 part by weight based on 100 parts by weight of the polyester copolymer. When the content is more than 1 part by weight, there is a disadvantage in that the transparency of the polyester copolymer to be prepared is lowered. When the content is less than 0.01 part by weight, there is a disadvantage in that the processability is slightly improved.

### The polyester copolymer

The polyester copolymer according to the present disclosure can be prepared by copolymerizing the above-mentioned dicarboxylic acid component, the diol component, and the trifunctional compound. Herein, the copolymerization may proceed by sequentially performing an esterification reaction and a polycondensation reaction.

The esterification reaction is performed in the presence of an esterification catalyst, and the esterification catalyst may include a zinc-based compound. Specific examples of the zinc-based catalyst include zinc acetate, zinc acetate dihydrate, zinc chloride, zinc sulfate, zinc sulfide, zinc carbonate, zinc citrate, zinc gluconate, or a mixture thereof.

The esterification reaction may be performed at a pressure of 0 to 10.0 kg/cm² and a temperature of 150 to 300 °C. The esterification reaction conditions may be appropriately adjusted depending on specific characteristics of the polyester to be prepared, the ratio of each component, or process conditions. Exemplary conditions for the esterification reaction include a pressure of 0 to 5.0 kg/cm², more preferably 0.1 to 3.0 kg/cm²; and a temperature of 200 to 270 °C, more preferably 240 to 260 °C.

The esterification reaction may be performed in a batch or continuous manner. The respective raw materials may be separately added, or they are added in the form of slurry by mixing the diol component with the dicarboxylic acid component and the trifunctional compound. The slurry may be prepared by dissolving the diol component such as isosorbide in the form of a solid at room temperature in water or ethylene glycol, and then mixing the solution with the dicarboxylic acid component such as terephthalic acid. Alternatively, the slurry may be prepared by melting isosorbide at 60 °C or higher, and then mixing the molten isosorbide with the dicarboxylic acid component such as terephthalic acid and other diol component. Water may be further added to the mixed slurry to help increase the fluidity thereof.

A molar ratio between the dicarboxylic acid component and the diol component participating in the esterification reaction may be 1: 1.05 to 1: 3.0. When the molar ratio of dicarboxylic acid component: diol component is less than 1: 1.05, the dicarboxylic acid component may remain unreacted after polymerization, causing poor transparency of the resin. On the contrary, when the molar ratio exceeds 1: 3.0, a polymerization rate may be lowered or productivity of the resin may be decreased.

The polycondensation reaction may be performed by reacting the esterification product at a temperature of 150 to 300 °C and at a reduced pressure of 600 to 0.01 mmHg for 1 to 24 hours.

The polycondensation reaction may be performed at a temperature of 150 to 300 °C, preferably 200 to 290 °C, more preferably 260 to 280 °C, and at a reduced pressure of 600 to 0.01 mmHg, preferably 200 to 0.05 mmHg, more preferably 100 to 0.1 mmHg. The reduced pressure condition of the polycondensation reaction enables the removal of glycol, which is a by-product of the polycondensation reaction, from the system. When the polycondensation reaction is performed outside the reduced pressure range of 400 to 0.01 mmHg, removal of the by-product may be insufficient. When the polycondensation reaction is performed outside the temperature range of 150 to 300 °C, that is, when the polycondensation reaction is performed at a temperature of 150 °C or lower, glycol which is a by-product of the polycondensation reaction cannot be effectively removed from the system, and as a result, an intrinsic viscosity of the final reaction product may be lowered, which adversely affects physical properties of the polyester resin. When the reaction is performed at a temperature of 300 °C or higher, there is a high possibility that yellowing may occur on appearance of the polyester resin. The polycondensation reaction may be performed for a time necessary for the intrinsic viscosity of the final reaction product to reach an appropriate level, for example, for an average retention time of 1 to 24 hours.

In addition, the polycondensation reaction may use a polycondensation catalyst including a titanium-based compound, a germanium-based compound, an antimony-based compound, an aluminum-based compound, a tin-based compound or a mixture thereof.

The titanium-based compound may be exemplified by tetraethyl titanate, acetyltripropyl titanate, tetrapropyl titanate, tetrabutyl titanate, 2-ethylhexyl titanate, octhylene glycol titanate, lactate titanate, triethanolamine titanate, acetylacetonate titanate, ethylacetoaceticester titanate, isostearyl titanate, and titanium dioxide. The germanium-based compound may be exemplified by germanium dioxide, germanium tetrachloride, germanium ethyleneglycoxide, germanium acetate, a copolymer thereof, and a mixture thereof. Preferably, germanium dioxide is used, and the germanium dioxide may be in a crystalline or amorphous form. Glycol soluble germanium dioxide may be also used.

Meanwhile, the polyester copolymer according to the present disclosure has an intrinsic viscosity of 0.75 to 0.82 dl/g, preferably 0.78 to 0.80 dl/g. A measuring method of the intrinsic viscosity is specified in the following Examples.

In addition, the polyester copolymer according to the present disclosure preferably has a melt viscosity of 8000 Pa.s or more at 210 °C and a shear rate of 0.5 s⁻¹, and a melt viscosity of 1200 Pa.s or less at 210 °C and a shear rate of 500 s⁻¹. Preferably, the polyester copolymer according to the present disclosure has a melt viscosity of 2000 Pa.s or less at 210 °C and a shear rate of 200 s⁻¹.

The present disclosure also provides a product including the polyester copolymer.

### [ADVANTAGEOUS EFFECTS]

The polyester copolymer according to the present disclosure described above is excellent in processability, particularly in shear thinning characteristics, and thus can be applied to the production of various transparent containers by an EBM process.

### [DETAILED DESCRIPTION OF THE EMBODIMENTS]

Hereinafter, the present invention will be described in more detail with the following preferred examples. However, these examples are for illustrative purposes only, and the present invention is not intended to be limited by these examples.

### Example 1

A mixture was prepared by adding TPA (terephthalic acid), EG (ethylene glycol), CHDM (1,4-cyclohexanedimethanol), and ISB (isosorbide) to a 7 L reactor as shown in Table 1 below. TMA (trimellitic anhydride) was added thereto in the content shown in Table 1 below based on 100 parts by weight of the mixture.

20 ppmw of zinc acetate was added and mixed based on 100 parts by weight of the prepared mixture, and an esterification reaction was performed for about 260 minutes at a pressure of 2.0 kg/cm²and a temperature of 255 °C. After the completion of the esterification reaction, when water, a by-product, flowed out of the system by 80 to 99%, 200 ppmw of germanium dioxide was added (based on central element) with respect to a weight of all the reactants, and a polycondensation reaction was performed under vacuum of 0.5 mmHg and at 275 °C. When the target viscosity was reached, the reaction was terminated to obtain a polyester copolymer.

### Example 2

A copolymer was prepared in the same manner as in Example 1, except that the TMA content was changed to the content shown in Table 1.

### Comparative Example 1

A copolymer was prepared in the same manner as in Example 1, except that TMA was not used.

### Comparative Example 2

A copolymer was prepared in the same manner as in Example 1, except that ISB was not used.

### Comparative Example 3

A copolymer was prepared in the same manner as in Example 2, except that ISB was not used.

### Comparative Example 4

A copolymer was prepared in the same manner as in Example 1, except that ISB and TMA were not used.

### Experimental Examples

Physical properties of the copolymers prepared in Examples and Comparative Examples were evaluated as follows.
1) Intrinsic viscosity: The polyester copolymer was dissolved in 150 °C orthochlorophenol (OCP) at a concentration of 0.12%, and then the intrinsic viscosity was measured using an Ubbelohde viscometer in a 35 °C thermostat.
2) Haze: A polyester copolymer specimen having a thickness of 3 mm was prepared, and then the haze was measured according to ASTM D1003.
3) Capacity of moldable bottle: Molding was performed with 2 heads to 500 mL, 1 L, and 2 L. Specifically, the bottle was molded by forming a parison at a temperature of about 190 to 210 °C in Bekum EBM machine.
4) Drop height: The bottle prepared in the above 3) was filled with water, and dropped at a drop height of 1 m and 1.5 m. Thereafter, it was confirmed that whether or not the condition of the bottle was maintained, and the maximum drop height maintained is shown in Table 1 below.

The results are shown in Table 1 below.

**[Table 1]**

| | TPA | EG | CHDM | ISB | TMA | IV | Haze | Capacity of moldabl e bottle | Drop height |
|---|---|---|---|---|---|---|---|---|---|
| Unit | parts by weight | parts by weight | parts by weight | parts by weight | wt% | dl/g | % | L | m |
| Ex. 1 | 55.3 | 10.8 | 32.7 | 1.2 | 0.03 | 0.80 | <1 | 2 | 1.5 |
| Ex. 2 | 55.3 | 10.8 | 32.7 | 1.2 | 0.15 | 0.80 | <1 | 2 | 1.5 |
| Comp. Ex. 1 | 55.3 | 10.8 | 32.7 | 1.2 | - | 0.80 | <3 | 0.5 | 1.0 |
| Comp. Ex. 2 | 55.3 | 10.8 | 32.7 | - | 0.15 | 0.80 | <3 | 2 | 1.5 |
| Comp. Ex. 3 | 55.3 | 10.8 | 32.7 | - | 0.03 | 0.80 | <3 | 1 | 1.5 |
| Comp. Ex. 4 | 55.3 | 10.8 | 32.7 | - | - | 0.79 | <3 | 0.5 | 1.0 |

5) Melt Viscosity: The melt viscosity was measured for the polyester copolymer at a shear rate of 0.5 to 500 s⁻¹ at 210 °C under nitrogen using Advanced Rheometric Expansion System (ARES) instrument (manufactured by TA Instruments). In the measurement, parallel plates having a diameter of 25 mm were placed in parallel at an interval of about 1.5 to 2 mm. The results of the polyester copolymer of Example 1 are shown in Table 2 below.

**[Table 2]**

| Meas. Pts. | Angular Frequency | Complex Viscosity |
|---|---|---|
| | [1/s] | [Pa·s] |
| 1 | 0.5 | 8.05×10³ |
| 2 | 0.792 | 7.87×10³ |
| 3 | 1.26 | 7.60×10³ |
| 4 | 1.99 | 7.26x10³ |
| 5 | 3.15 | 6.86×10³ |
| 6 | 5 | 6.40×10³ |
| 7 | 7.92 | 5.89×10³ |
| 8 | 12.6 | 5.34×10³ |
| 9 | 19.9 | 4.78×10³ |
| 10 | 31.5 | 4.20×10³ |
| 11 | 50 | 3.62×10³ |
| 12 | 79.2 | 3.06×10³ |
| 13 | 126 | 2.53×10³ |
| 14 | 199 | 2.04×10³ |
| 15 | 315 | 1.61×10³ |
| 16 | 500 | 1.24×10³ |

## Claims

1. A polyester copolymer, comprising
1) a residue of a dicarboxylic acid component containing terephthalic acid;
2) a residue of diol components containing cyclohexanedimethanol, ethylene glycol, and isosorbide; and
3) a residue of a trifunctional compound,
wherein the polyester copolymer has an intrinsic viscosity of 0.75 to 0.82 dl/g. dl/g, measured as indicated in the specification.

2. The polyester copolymer of claim 1,
wherein the residue of cyclohexanedimethanol is contained in 30 to 70 parts by weight based on 100 parts by weight of the residue of the total diol components.

3. The polyester copolymer of claim 1,
wherein the residue of ethylene glycol is contained in 5 to 25 parts by weight based on 100 parts by weight of the residue of the total diol components.

4. The polyester copolymer of vlaim 1,
wherein the residue of isosorbide is contained in 0.1 to 5 parts by weight based on 100 parts by weight of the residue of the total diol components.

5. The polyester copolymer of Claim 1,
wherein the trifunctional compound is benzenetricarboxylic acid, or an anhydride thereof.

6. The polyester copolymer of claim 1,
wherein the trifunctional compound is benzene-1,2,3-tricarboxylic acid, benzene-1,2,3-tricarboxylic acid anhydride, benzene-1,2,4-tricarboxylic acid, or benzene-1,2,4-tricarboxylic acid anhydride.

7. The polyester copolymer of claim 1,
wherein the residue of the trifunctional compound is contained in 0.01 to 1 part by weight based on 100 parts by weight of the polyester copolymer.

8. The polyester copolymer of claim 1,
wherein the polyester copolymer has a melt viscosity of 8000 Pa.s or more at 210 °C and a shear rate of 0.5 s⁻¹, and a melt viscosity of 1200 Pa.s or less at 210 °C and a shear rate of 500 s⁻, measured as indicated in the specification.

9. The polyester copolymer of claim 8,
wherein the polyester copolymer has a melt viscosity of 2000 Pa.s or less at 210 °C and a shear rate of 200 s⁻¹.

10. A product comprising the polyester copolymer according to any one of claims 1 to 9.

## Patentansprüche

1. Polyester-Copolymer, umfassend
1) einen Rest einer Dicarbonsäurekomponente, die Terephthalsäure enthält;
2) einen Rest von Diolkomponenten, die Cyclohexandimethanol, Ethylenglykol und Isosorbid enthalten; und
3) einen Rest einer trifunktionellen Verbindung, wobei das Polyester-Copolymer eine intrinsische Viskosität von 0,75 bis 0,82 dl/g aufweist, gemessen wie in der Spezifikation angegeben.

2. Polyester-Copolymer nach Anspruch 1,
wobei der Rest von Cyclohexandimethanol in 30 bis 70 Gewichtsteilen, bezogen auf 100 Gewichtsteile des Restes der gesamten Diolkomponenten, enthalten ist.

3. Polyester-Copolymer nach Anspruch 1,
wobei der Rest von Ethylenglykol in 5 bis 25 Gewichtsteilen, bezogen auf 100 Gewichtsteile des Restes der gesamten Diolkomponenten, enthalten ist.

4. Polyester-Copolymer nach Anspruch 1,
wobei der Rest von Isosorbid in 0,1 bis 5 Gewichtsteilen, bezogen auf 100 Gewichtsteile des Restes der gesamten Diolkomponenten, enthalten ist.

5. Polyester-Copolymer nach Anspruch 1,
wobei die trifunktionelle Verbindung Benzoltricarbonsäure oder ein Anhydrid davon ist.

6. Polyester-Copolymer nach Anspruch 1,
wobei die trifunktionelle Verbindung Benzol-1,2,3-tricarbonsäure, Benzol-1,2,3-tricarbonsäureanhydrid, Benzol-1,2,4-tricarbonsäure oder Benzol-1,2,4-tricarbonsäureanhydrid ist.

7. Polyester-Copolymer nach Anspruch 1,
wobei der Rest der trifunktionellen Verbindung in 0,01 bis 1 Gewichtsteil, bezogen auf 100 Gewichtsteile des Polyester-Copolymers, enthalten ist.

8. Polyester-Copolymer nach Anspruch 1,
wobei das Polyester-Copolymer eine Schmelzviskosität von 8000 Pa.s oder mehr bei 210 °C und einer Scherrate von 0,5 s⁻¹, und eine Schmelzviskosität von 1200 Pa.s oder weniger bei 210 °C und einer Scherrate von 500 s⁻, gemessen wie in der Spezifikation angegeben, aufweist.

9. Polyester-Copolymer nach Anspruch 8,
wobei das Polyester-Copolymer eine Schmelzviskosität von 2000 Pa.s oder weniger bei 210 °C und einer Scherrate von 200 s⁻¹ aufweist.

10. Produkt, umfassend das Polyester-Copolymer nach irgendeinem der Ansprüche 1 bis 9.

## Revendications

1. Copolymère de polyester, comprenant
1) un résidu d'un composant acide dicarboxylique contenant de l'acide téréphtalique ;
2) un résidu de composants diol contenant du cyclohexanediméthanol, de l'éthylène glycol et de l'isosorbide ; et
3) un résidu d'un composé trifonctionnel,
dans lequel le copolymère de polyester a une viscosité intrinsèque de 0,75 à 0,82 dl/g, mesuré comme indiqué dans la spécification.

2. Copolymère de polyester selon la revendication 1,
dans lequel le résidu de cyclohexanediméthanol est contenu à raison de 30 à 70 parties en poids sur la base de 100 parties en poids du résidu des composants diol totaux.

3. Copolymère de polyester selon la revendication 1,
dans lequel le résidu d'éthylène glycol est contenu à raison de 5 à 25 parties en poids sur la base de 100 parties en poids du résidu des composants diol totaux.

4. Copolymère de polyester de la revendication 1,
dans lequel le résidu d'isosorbide est contenu à raison de 0,1 à 5 parties en poids pour 100 parties en poids du résidu des composants diol totaux.

5. Copolymère de polyester selon la revendication 1,
dans lequel le composé trifonctionnel est l'acide benzènetricarboxylique, ou un anhydride de celui-ci.

6. Copolymère de polyester selon la revendication 1,
dans lequel le composé trifonctionnel est l'acide benzène-1,2,3-tricarboxylique, l'anhydride d'acide benzène-1,2,3-tricarboxylique, l'acide benzène-1,2,4-tricarboxylique ou l'anhydride d'acide benzène-1,2,4-tricarboxylique.

7. Copolymère de polyester selon la revendication 1,
dans lequel le résidu du composé trifonctionnel est contenu à raison de 0,01 à 1 partie en poids pour 100 parties en poids du copolymère de polyester.

8. Copolymère de polyester selon la revendication 1,
dans lequel le copolymère de polyester a une viscosité à l'état fondu de 8 000 Pa.s ou plus à 210 °C et un taux de cisaillement de 0,5 s⁻¹, et une viscosité à l'état fondu de 1 200 Pa.s ou moins à 210 °C et un taux de cisaillement de 500 s⁻ mesuré comme indiqué dans la spécification.

9. Copolymère de polyester selon la revendication 8,
dans lequel le copolymère de polyester a une viscosité à l'état fondu de 2 000 Pa.s ou moins à 210 °C et un taux de cisaillement de 200 s⁻¹.

10. Produit comprenant le copolymère de polyester selon l'une quelconque des revendications 1 à 9.
